Europäisches Patentamt

European Patent Office

Office européen des brevets

(11) Veröffentlichungsnummer: **0 222 689 B1**

# EUROPÄISCHE PATENTSCHRIFT

(45) Veröffentlichungstag der Patentschrift: **15.05.91**

(21) Anmeldenummer: **86730170.7**

(22) Anmeldetag: **23.10.86**

(51) Int. Cl.⁵: **G02B 23/02**, G02B 23/16, G02B 17/00, G02B 7/18

(54) **Spiegelteleskop.**

(30) Priorität: **23.10.85 DE 3538208**

(43) Veröffentlichungstag der Anmeldung:
**20.05.87 Patentblatt 87/21**

(45) Bekanntmachung des Hinweises auf die Patenterteilung:
**15.05.91 Patentblatt 91/20**

(84) Benannte Vertragsstaaten:
**AT BE CH DE ES FR GB GR IT LI LU NL SE**

(56) Entgegenhaltungen:
**DE-A- 2 531 767**
**US-A- 3 502 387**
**US-A- 3 507 547**
**US-A- 3 791 713**

(73) Patentinhaber: **Hügenell, Hermann**
**Maxdorfer Strasse 47**
**W-6715 Lambsheim(DE)**

Patentinhaber: **Angstenberger, Karl Friedrich, Dipl.-Ing.**
**Albrecht-Dürer-Ring 29 a**
**W-6710 Frankenthal(DE)**

(72) Erfinder: **Hügenell, Hermann**
**Maxdorfer Strasse 47**
**W-6715 Lambsheim(DE)**

(74) Vertreter: **Heim, Hans-Karl, Dipl.-Ing. et al**
**c/o Weber & Heim Hofbrunnstrasse 36**
**W-8000 München 71(DE)**

## Beschreibung

Die Erfindung bezieht sich auf Spiegelteleskop mit einem aus einzelnen, einstellbar gelagerten Spiegelsegmenten gebildeten Primärspiegel, mit einem konzentrisch zu diesem angeordneten, mit Beobachtungskabinen versehenen Tubus und mit einem Halterungsgestänge für den Tubus.

Ein Spiegelteleskop der gattungsgemäßen Art ist als Mauna-Kea-Spiegelteleskop mit 10 Meter Spiegeldurchmesser bekannt, welches das derzeit größte, noch in der Planung befindliche Spiegelteleskop der Welt werden soll ( Sterne und Weltraum 1984/ 8 bis 9/ Seite 412). Bei diesem Spiegelteleskop ist der Primärspiegel aus 36 hexagonalen Spiegelsegmenten gebildet, die bienenwabenförmig die Spiegelfläche bilden, wobei in der Mitte ein Spiegelsegment zur Beobachtung im Cassegrain-Fokus ausgespart ist. Die Herstellung der einzelnen hexagonalen Spiegelsegmente selbst ist äußerst problematisch. Es handelt sich bei diesen um achsferne Ausschnitte eines Paraboloids, die sechseckig zugeschnitten werden müssen. Bei der Herstellung wird von einem kreisförmigen Rohling ausgegangen, der durch am Rand ansetzende, genau definierte Scher- und Biegekräfte verformt wird. In den verformten Rohling wird eine Kugelform eingeschliffen. Danach werden die aufgebrachten Kräfte wieder entfernt. Sofern die Kräfte richtig gewählt waren, nimmt das Spiegelsegment bei der Entlastung die gewünschte Form des Paraboloid-Ausschnittes an. Es hat sich jedoch gezeigt, daß beim Schneiden in die hexagonale Form Verwerfungen auftreten, so daß die Herstellung der einzelnen Spiegelsegmente äußerst aufwendig ist. Darüber hinaus muß die Lage der einzelnen hexagonalen Spiegelsegmente je nach Stellung des Teleskos, Windlast und Temperaturschwankungen nachgeregelt werden. Dazu sind die Unterstützungspunkte jedes Spiegelsegments mit drei Lagereglern verbunden, die das Spiegelsegment nachfokussieren und in zwei Neigungsrichtungen verstellen können. An den rückseitigen Kanten befinden sich Sensoren, welche die Verschiebung benachbarter Spiegelsegmente gegeneinander messen. Zusammen mit drei Neigungssensoren, die die Gesamtkrümmung des Spiegelsegments messen, liefern diese die Informationen, die in einem Rechnersystem verarbeitet werden, das die insgesamt 108 Lageregler steuert. Bei insgesamt 168 verschiedenen Sensoren ist die Redundanz so groß, daß der Ausfall einzelner Sensoren verkraftet werden kann. Allerdings bleiben bei dieser Anordnung die Vorderseiten der Spiegelsegmente von störenden Kontrollsystemen frei, es muß nur gelegentlich mit Hilfe eines Sternbilds nachjustiert werden, so daß auch Infrarotbeobachtungen am Tage möglich sein werden.Der US-A 3.791,773 ist ein

spiegelteleskop gemäß dem oberbegriff des Anspruch, zu entnemen.

Es sind darüber hinaus einstückige Primärspiegel für Spiegelteleskope bekannt, so z.B. das 3,5 Meter- Teleskop für das Max -Planck- Institut für Astronomie ( Zeiss Informationen Heft 94, 1982, Seiten 4 ff). Hierbei besteht der Spiegelkörper aus Glaskeramik ( ZERODUR) mit geringem Temperaturausdehnungskoeffizienten. Die Spiegelfläche ist als Rotationshyperboloid höherer Ordnung geschliffen und poliert. Die Standardabweichung beträgt maximal 30 nm, die Messung erfolgt mit einem Laser- Inferometer. Die Lagerung des Spiegelkörpers erfolgt über eine 18-Punkte-Lagerung.

An derartige Spiegelteleskope werden folgende Anforderungen gestellt:

1. Es soll soviel Strahlungsenergie wie möglich eingefangen werden, diese ist der sammelnden Fläche des Primärspiegels proportional. Folglich soll der Durchmesser des Primärspiegels so groß wie möglich sein. Der Durchmesser wird jedoch durch technische und ökonomische Bedingungen begrenzt.

2. Die von einem Stern aufgesammelte Strahlung soll möglichst scharf auf einem Punkt in der Fokalebene des Spiegelteleskops konzentriert sein. Die Qualität der optischen Abbildung soll möglichst gut sein. Nachteile bestehen bei erdgebundenen Spiegelteleskopen durch den Einfluß der Erdathmosphäre, z. B. Turbulenz der Luft. Spiegelteleskope auf Satellitenbahnen haben diese Nachteile allerdings nicht.

3. Der abgebildete Stern soll möglichst lange ohne örtliche Schwankungen auf der Bildebene gehalten werden.

Nachteilig bei den einstückigen Primärspiegeln für Spiegelteleskope ist, daß diese herstellungsbedingt im Durchmesser beschränkt sind. Das größte Spiegeltelskop mit einem einstückigen Primärspiegel ist das Hale-Teleskop mit einem Spiegeldurchmesser von 5 m. Das einzig vorbekannte Spiegelteleskop mit einem Primärspiegel aus einzelnen Spiegelsegmenten hat den Nachteil, daß die Herstellung der einzelnen Spiegelsegmente äußerst aufwendig ist, da jedes Spiegelsegment für sich als Ausschnitt eines Paraboloids geschliffen werden muß. Ferner müssen an den Berührungslinien der einzelnen Segmente die Sensoren eine exakte Justierung gewährleisten. Der dabei betriebene Aufwand an zusätzlichen technischen Maßnahmen ist im Verhältnis zur Gesamtwirkung des Teleskops äußerst hoch. Außerdem ist eine äußerst komplexe Segmentlagerung erforderlich.

Den beiden Arten von Spiegeltelskopen gemeinsam m ist der Nachteil, daß die sich innerhalb des Tubus befindlichen Beobachtungskabinen mit ihrem ganzen Durchmesser die Spiegelfläche des Primärspiegels abschatten. Gleichzeitig verursachen die Halterungsgestänge zusätzliche Abschattungsflächen, die sich teilweise radial über den Primärspiegel erstrecken. Diese Abschattungsflächen sind bei allen Fokussierungsarten vorhanden und unvermeidlich. Sie bedeuten, daß mit hohem Kostenaufwand hergestellte Spiegelflächen des Primärspiegels unwirksam sind, da diese nicht zur Sammlung der Strahlungsenergie beitragen können.

Der Erfindung liegt von daher die Aufgabe zugrunde, ein Spiegeltelskop der gattungsgemäßen Art zu schaffen, dessen einzelne Spiegelsegmente und Segmentlagerungen im Aufbau und in der Herstellung einfach bzw. kostengünstig und derart angeordnet sind, daß von den Beobachtungskabinen und dem Halterungsgestänge des Tubus verursachte Abschattungsflächen vermieden sind.

Zur Lösung dieser Aufgabe sieht die Erfindung vor, daß die Spiegelsegmente aus kreisscheibenförmigen Spiegelkörpern gebildet und auf konzentrisch zum Tubus verlaufenden Kreisbahnen im Abstand voneinander derart gelagert sind, daß zwischen den einzelnen Spiegelkörpern Freiflächen für die Lagerungen der Spiegelkörper und für das Halterungsgestänge bzw. für dessen Abschattungsflächen gebildet sind. Beim erfindungsgemäßen Spiegelteleskop, auch Zentralachsenspiegler genannt, befinden sich die Halterungsgestänge außerhalb des Strahlenganges und schatten somit keine kostbare Spiegelfläche ab, während die durch die Beobachtungskabinen verursachte Zentralabschattung zur Umlenkung des einfallenden Lichtes vielseitig ausgenutzt wird. Die einzelnen Spiegelsegmente sind beim Zentralachsenspiegler Rundspiegel, bei welchen die bei den hexagonalen Spiegelsegmenten gemäß dem Stand der Technik auftretenden schwierigen Zug- und Druckverhältnisse, die sich je nach Schrägstellung des Tubus einstellen, vermieden sind. Bei kreisrunden Spiegelkörpern wird die Lagerung seit langem technisch beherrscht.

Die Erfindung basiert somit auf der Kombination der Verwendung von technisch mit bekannten Maßnahmen einfach und kostengünstig herstellbaren Spiegelkörpern als Rundspiegeln und deren derartiger Anordnung, daß zwischen den einzelnen Spiegelkörpern Freiflächen für die Lagerung der Spiegelkörper einerseits und für das Halterungsgestänge bzw. für dessen Abschattungsflächen andererseits gebildet sind. Somit kann bei der Herstellung des erfindungsgemäßen Spiegelteleskopes einerseits auf die bekannte und beherrschte Technologie der Herstellung eines mit einer einstellbaren Lagerung versehenen einstückigen Spiegelkörpers zurückgegriffen werden. Gleichzeitig wird erfindungsgemäß vorgeschlagen, diese einstückigen runden Spiegelkörper in Abständen voneinander auf Kreisbahnen derart anzuordnen, daß die dazwischenliegenden Freiräume als Freiflächen für die Lagerung des Spiegelkörpers einerseits und für das Halterungsgestänge bzw. für dessen Abschattungsflächen verwendet werden können.

Zur Ermittlung des Tubusdurchmessers, welcher gleichzeitig Größtdurchmesser des Primärspiegels ist, wird von dem gewünschten Durchmesser eines einstückigen bzw. einflächigen Spiegels ausgegangen. Wird beispielsweise ein effektiver Durchmesser des Primärspiegels von 20 m gewünscht, welcher auf 18 runde Spiegelkörper verteilt werden muß, so ergibt sich der Radius eines einzelnen runden Spiegelkörpers aus folgender Rechnung:

$$18 \; r^2 = 100$$
$$r = 2,357 \; m$$

Jeder der 18 Spiegelkörper hat somit einen Durchmesser von 4,714 m. Der Gesamtdurchmesser des Primärspiegels aus 18 runden Spiegelkörpern beträgt 26,946 m. Damit sind die Freiräume zwischen den 18 runden Spiegelkörpern wie die entsprechenden Abschattungsflächen eines hypothetischen Monospiegels mit 26,946 m Durchmesser zu behandeln.

Erfindungsgemäß wird ferner vorgeschlagen, daß die Oberflächen aller Spiegelkörper zur Ausbildung der gewünschten Spiegeloberfläche des Primärspiegels, insbesondere Paraboloid, gem einsam geschliffen werden; dies kann analog zum Schleifen und Polieren eines einstückigen Primärspiegels gemäß dem Stand der Technik erfolgen.

Erfindungsgemäß wird weiter vorgeschlagen, daß das eingangsseitige Halterungsgestänge des Tubus aus einem Lochblech mit Öffnungen gebildet ist, deren Anordnung und Durchmesser der Anordnung und dem Durchmesser der Spiegelkörper des Primärspiegels entspricht.

Die Erfindung umfaßt ferner noch die Ausbildung eines speziellen, sich außerhalb des Strahlenganges des Zentralachsenspieglers befindlichen Halterungsgestänges mit frei und längs der Zentralachse beweglichen Beobachtungskabinen. Erfindungsgemäß sind beim Zentralachsenspiegler drei Beobachtungskabinen vorgesehen, welche mit diversen Umlenkspiegeln versehen sind, je nach dem gewünschten Fokus. Alle Beobachtungskabinen sind frei und längs der Zentralachse beweglich.

Die Erfindung ist nachfolgend anhand eines in den Zeichnungen näher dargestellten Ausführungsbeispieles eines Spiegelteleskopes näher erläutert. Es zeigen:

Fig. 1     eine Draufsicht auf den Primärspiegel aus 18 runden Spiegelkörpern und dem zwischen diesen gelagerten Halterungsgestänge,

Fig. 2    einen Prinzipschnitt längs der Zentralachse des Primärspiegels durch das Halterungsgestänge mit den an diesem verfahrbaren drei Beobachtungskabinen,

Fig. 3    eine perspektivische Darstellung des Primärspiegels zur Erläuterung der Justierung der einzelnen runden Spiegelkörper mittels einem Laser-Impulsgeber,

Fig. 4    eine Prinzipdarstellung des Schleifverfahrens des aus runden Spiegelkörpern gebildeten Primärspiegels,

Fig. 5    die Darstellung eines einzelnen runden Spiegelkörpers,

Fig. 6    Funktionsdarstellungen,

Fig. 7    bis 10 Prinzipdarstellungen der Strahlengänge bei verschiedenen Beobachtungsarten,

Fig. 11   eine perspektivische Darstellung des Halterungsgestänges,

Fig. 12   eine Teildarstellung hierzu,

Fig. 13   einen Schnitt entlang der Zentralachse durch das Halterungsgestänge,

Fig. 14   einen Längsschnitt durch ein Führungsrohr,

Fig. 15   eine perspektivische Darstellung des Rahmens des Tubus,

Fig. 16   der fertig montierte Tubus mit Rahmen, Primärspiegel und Halterungsgestänge,

Fig. 17   einen axialen Schnitt durch eine Coudé-Kabine und

Fig. 18   eine teilweise geschnittene Perspektivdarstellung des fertigen Teleskops.

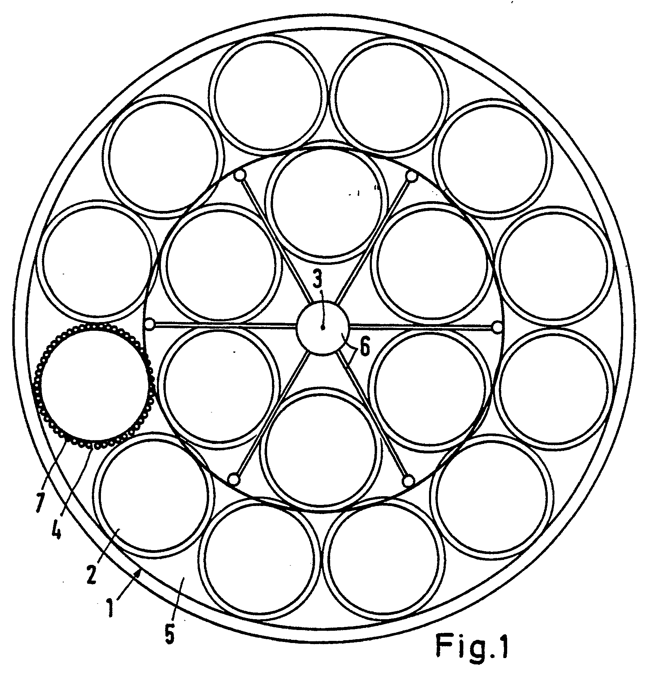

Die Fig. 1 zeigt eine Draufsicht auf den Primärspiegel 1 des Spiegelteleskops, welcher aus 18 einstellbar gelagerten Spiegelsegmenten 2 gebildet ist, wobei jedes Spiegelsegment 2 aus einem kreisscheibenförmigen, runden Spiegelkörper besteht. Die einzelnen Spiegelkörper 2 sind auf konzentrisch zur Zentralachse 3 verlaufenden Kreisbahnen im Abstand voneinander derart gelagert, daß zwischen den einzelnen Spiegelkörpern 2 Freiflächen 4 für die Lagerung[7] der Spiegelkörper 2 und Freiflächen 5 für ein Halterungsgestänge 6 bzw. für dessen Abschattungsflächen gebildet sind.

Jeder Spiegelkörper 2 besteht aus einem einstückigen Rundspiegel, dessen gesamte Fläche ohne die Aussparung einer zentralen Öffnung geschliffen ist. Derartige Rundspiegel, allerdings mit zentraler Öffnung, sind bezüglich ihrer Herstellung und Lagerung bekannt. So wird z.B. auf die Beschreibung des 3,5 m-Teleskops von Zeiss für das Max-Planck- Institut für Astronomie in "Zeiss Information" Heft 94, November 1982, Seite ff. hingewiesen. Ein derartiger Spiegelkörper umfaßt eine Spiegellagerung[7] mit radialer Zug- Druck- Entlastung, wozu Entlastungselemente am Umfang des Spiegelkörpers[2] vorhanden sind, für welche die Freiflächen 4 bestimmt sind.

Der Außendurchmesser des Primärspiegels 1 und damit der Tubusdurchmesser ergibt sich aus dem gewünschten effektiven Spiegeldurchmesser eines hypothetischen Monospiegels. Wenn die 18 einzelnen Spiegelkörper 2 einen Monospiegel von 20 m Dur chmesser ersetzen sollen, so wird folgende Berechnung ausgeführt:

Fläche des Monospiegels von 20 m Durchmesser:

$$A^* = 100 \, \pi = R^{*2} \, \pi$$

Zentralachsenspiegler mit 18 Spiegeln:

$$18 \, R^2 \pi = 100 \, \pi$$
$$18 \, R^2 = 100$$
$$r = 2,357 \text{ m}$$

Jeder der 18 Spiegel hat somit einen Durchmesser von 4,71 m.

Durch die Anordnung der 18 Spiegelkörper 2 vom vorgenannten Durchmesser auf zwei zur Zentralachse 3 radialen Kreisbahnen, deren innere Kreisbahn sechs Spiegelkörper 2 und deren äußere Kreisbahn zwölf Spiegelkörper 2 aufweist, ergibt sich ein Gesamt- Außendurchmesser des Primärspiegels 1 und damit des Tubus von 26,946 m.

Der hypothetische Monospiegel von 20 m Durchmesser und damit einer Spiegelfläche von $A^* = 100 \, \pi$ wird somit durch 18 einzelne Spiegelkörper 2 gleicher Gesamtfläche ersetzt. Wegen der Spiegelhalterungen erweitert sich der Durchmesser des Zentralachsenspieglers auf insgesamt 26,946 m. Damit sind die Freiräume 4,5 zwischen den 18 Spiegelkörpern 2 wie die entsprechenden Abschattungsflächen bei einem hypothetischen Monospiegel mit 26,946 m Durchmesser zu behandeln .

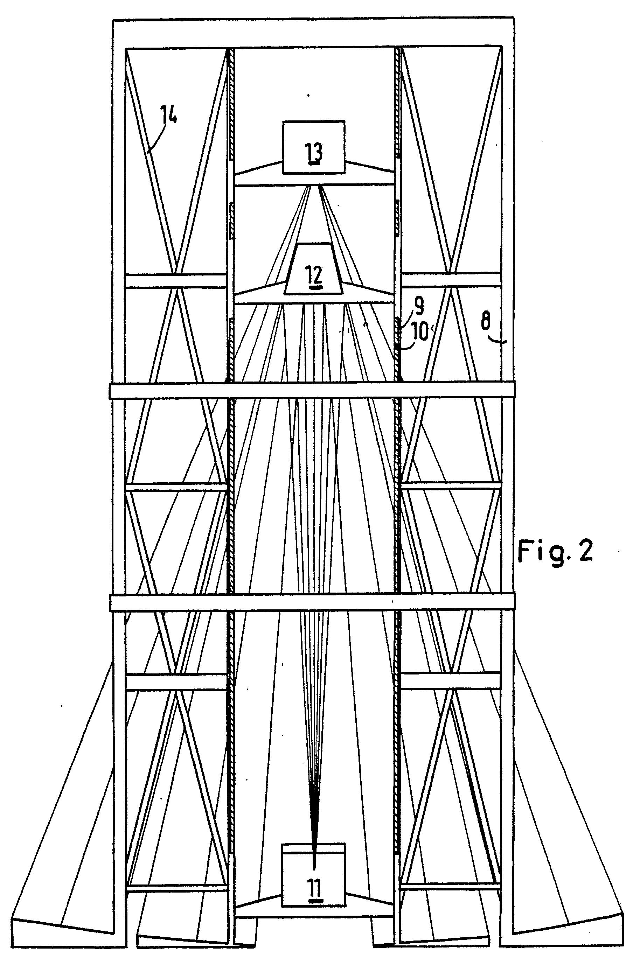

Das Halterungsgestänge 6 des in später noch näher beschriebener Weise parabolisch ausgebildeten Primärspiegels 1 ist in Fig. 2 in einem Prinzipschnitt längs der Zentralachse 3 dargestellt. Es umfaßt mittlere Halterrohre 8, die eine statische Tragekonstruktion für den Tubus bilden, und innere Führungsrohre 9, welche mit Führungsschienen 10 zur Führung von drei Beobachtungskabinen 11 bis 13 versehen sind. In der Anordnung gemäß Fig. 2 dient die untere Beobachtungskabine für die Beobachtung im Cassegrain-Fokus mit sechs und mit achtzehn Spiegeln. Die mittlere Beobachtungskabine 12 dient zur Beobachtung im Cassegrain- Fokus mit sechs Spiegeln. Die obere Beobachtungskabine 13 dient zur Beobachtung im Primär-und Cassegrain-Fokus mit achtzehn Spiegeln. Die jeweiligen Strahlengänge der von den achtzehn Spiegelkörpern 2 reflektierten Strahlen sind jeweils mit ihren Randstrahlen gezeigt. Die Fig. 2 zeigt die parabolische Ausbildung des Primärspiegels 1, welche später noch näher beschrieben werden wird, und ferner noch die gitterartigen Streben 14 zwischen den mittleren Halterohren 8 und den inneren Führungsrohren 9, welche später noch näher beschrieben werden.

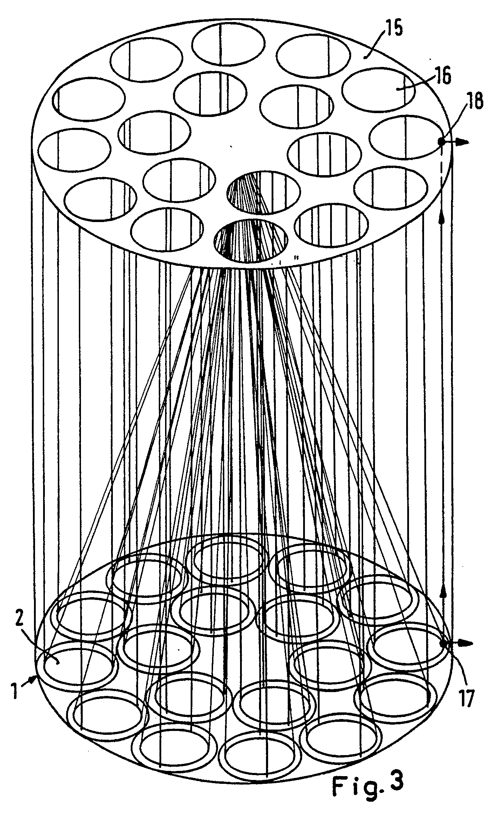

Die Lagejustierung der achtzehn Spiegelkörper 2 erfolgt gemäß Fig. 3 mittels nicht näher dargestellter Laser- Impulsgeber 17, die am Rande eines jeden Spiegelkörpers 2 so angebracht sind, daß diese bei exakter Brennpunkteinstellung einem senkrecht darüber befindlichen, an einem Lochblech 15 mit Öffnungen 16 angebrachten, von einem Computer kontrollierten Empfänger 18 Impulse abgeben können. Eine eventuelle Abweichung der Lage des Spiegelkörpers 2 von der vorher bestimmten Lage wird vom Computer berechnet und sofort mittels der einstellbaren Lagerung 7 eines jeden Spiegelkörpers 2 ausgeglichen. Zweckmäßigerweise sind die Lagerungen 7 Öldrucklagerungen, so daß auch notwendige Lageänderungen per Öldruck ausgeführt werden können.

Die Lagerungen 7 eines jeden Spiegelkörpers 2 sind in den Figuren nicht näher dargestellt. Hierzu bieten sich bereits bekannte und erprobte Lagerungen an, welche z. B. von der Firma Carl Zeiss in Oberkochen/ Bundesrepublik Deutschland mehrfach angewandt wurden. Derartige Lagerungen haben radiale Unterstützungssysteme mit einer reinen Druck- und Zug Druck- Entlastung. Die einzelnen Stützpunkte sind in einem hydraulischen Unterstützungssystem verteilt. Die Spiegelentlastung erfolgt über hydraulische Doppelkammern.

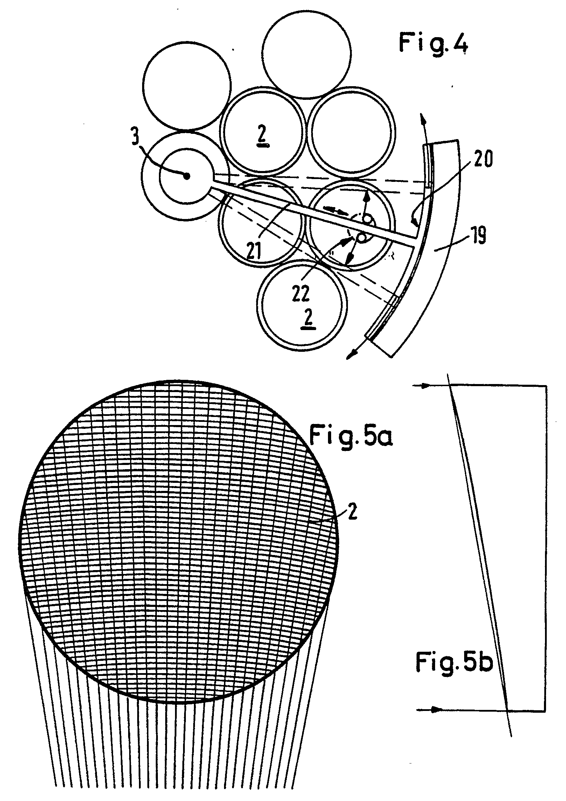

Das Schleifen des Primärspiegels 1 aus den im Ausführungsbeispiel 18 Spiegelkörpern 2 erfolgt gemäß Fig. 4 mittels eines konzentrisch um die Zentralachse 3 des Primärspiegels 1 herum gelegten Führungsblockes 19, an dessen Innenseite ein auf einem Ölfilm gelagerter Schlitten 20 gleitbar ist, welcher an einem Radialarm 21 geführt ist, welcher wiederum in der Zentralachse 3 gelagert ist. Entlang des Radialarmes 21 sind Polier-/ Schleif schalen 22 radial verfahrbar, welche mit eigenen Drehantrieben ausgebildet sind. Mittels dieser Schleifanordnung lassen sich alle achtzehn Spiegelkörper 2 exakt schleifen und polieren, wodurch die gewünschte Paraboloid-Form erreicht wird. Die Oberflächenprüfung erfolgt in nicht näher dargestellter Weise mittels eines Nulltest-Laser-Inferometers, wobei selbstverständlich vorausgesetzt ist, daß die einzelnen Spiegelkörper 2 auf einen gemeinsamen Brennpunkt des Primärspiegels 1 justiert und gelagert sind. Diese Lagejustierung erfolgt in der Weise, welche in Fig. 3 dargestellt und zusammen mit dieser beschrieben ist.

Die Form und der Schliff der einzelnen Spiegelkörper 2 sind aus Fig. 5 ersichtlich. Aufgrund der im Zusammenhang mit Fig. 4 beschriebenen Schleifverfahren haben die einzelnen Spiegelkörper 2 keine rotationssymmetrische Form. Ihre Oberflächenkrümmung ist Bestandteil des hypothetischen Großspiegels in Form des Primärspiegels 1 mit Parabeloberfläche, wobei die Oberflächenkrümmung der Spiegelkörper 2 jeweils kreisförmige Ausschnitte davon darstellt. Hiermit wird ein exakter Brennpunkt in der Zentralachse 3 erzielt. Die äußeren zwölf Spiegelkörper 2 können zur Gewichtseinsparung in ihrer äußeren Randüberhöhung minimiert werden, wie es in Fig. 5b dargestellt ist.

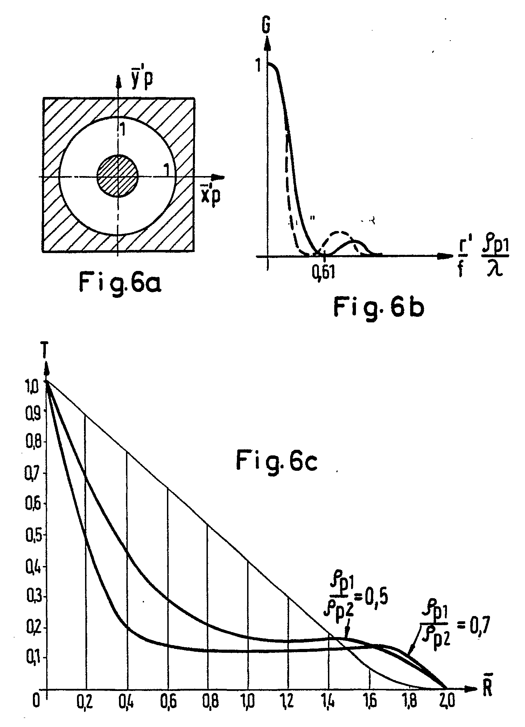

Die Fig. 6 zeigt mit ihren einzelnen Teilfiguren Auswirkungen der Zentralabschattung, d.h. des Zentrums des Primärspiegels 1, in welchem Zentrum selbst kein Spiegelkörper 2 angeordnet ist, wie es die Figuren 1 und 3 zeigen. Der dargestellte und beschriebene Zentralachsenspiegler verbessert das Auflösungsvermögen und setzt gleichzeitig den Kontrast bei mittleren Ortsfrequenzen herab ( Fig. 6a). Die Punktbildfunktion wird bei der erfindungsgemäßen Zentralabschattung ( gestrichelte Linie in Fig. 6b) gegenüber bekannten Punktbildfunktionen ( Fig. 6b) verbessert. Schließlich wird auch die Modulationsübertragungsfunktion bei der erfindungsgemäßen Zentralabschattung gemäß Fig. 6c verbessert.

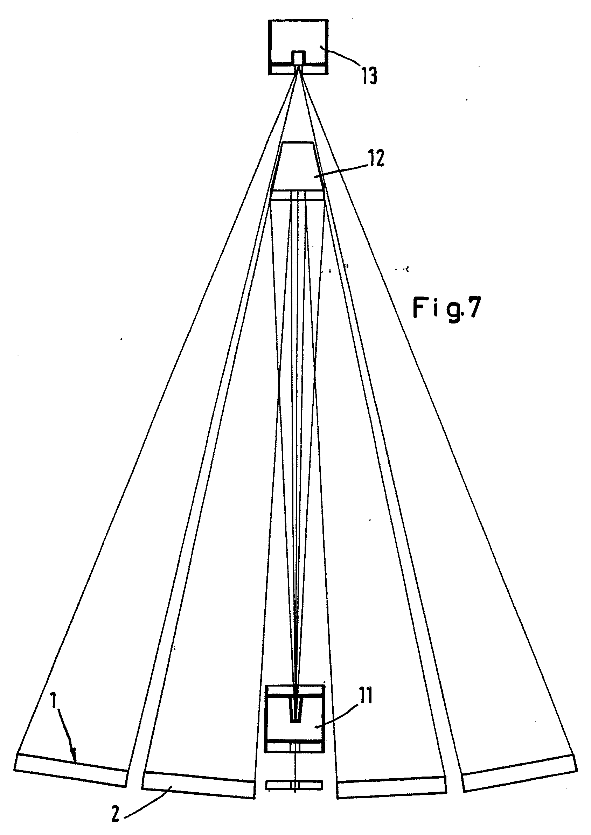

Die Figuren 7 bis 10 zeigen Prinzipdarstellungen der Strahlengänge bei verschiedenen Beobachtungsarten. So zeigt Fig. 7 einen Primärfokus mit zwölf Spiegelkörpern 2 bei gleichzeitigem Cassegrain -Fokus mit sechs Spiegeln 2. Die Stellung der Beobachtungskabinen 11 bis 13 entspricht dabei der Stellung gemäß Fig. 2.

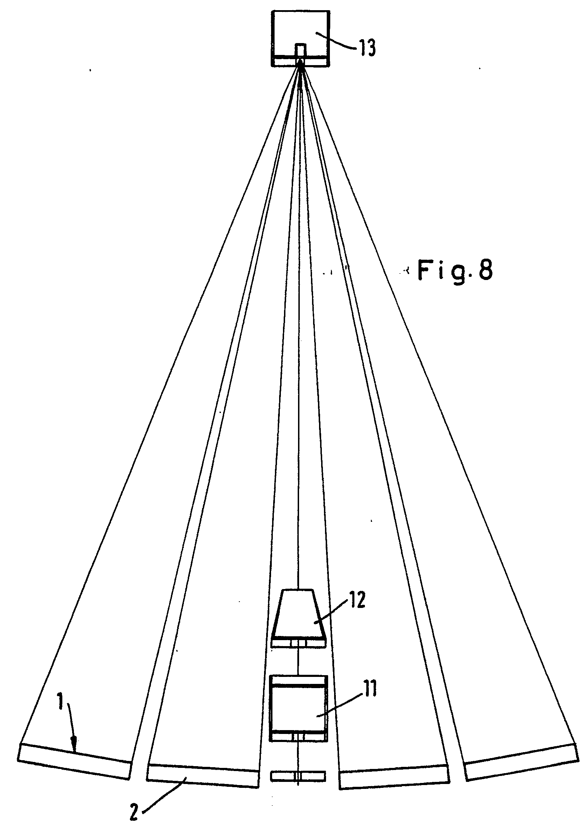

Die Fig. 8 zeigt den Primärfokus mit achtzehn Spiegeln in der oberen Beobachtungskabine 13, wobei die beiden anderen Beobachtungskabinen 11 und 12 nach unten bewegt und unbenutzt sind.

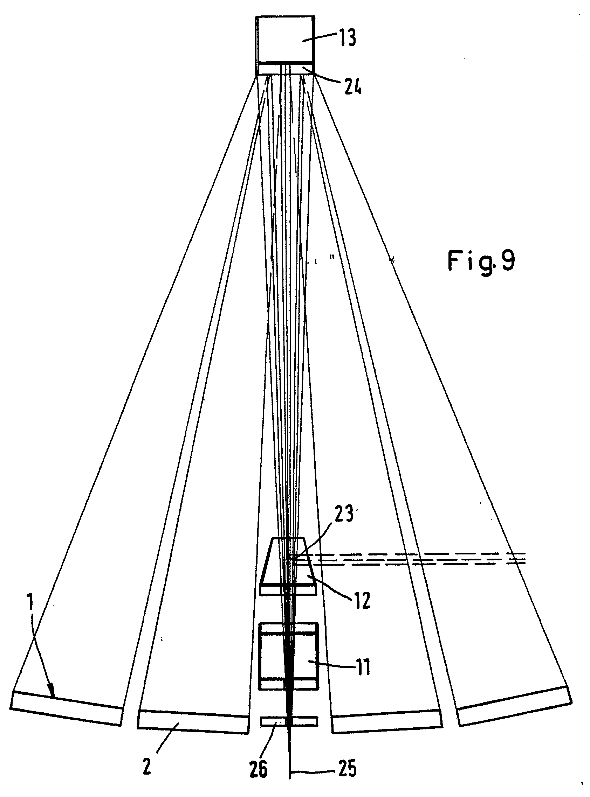

Die Fig. 9 zeigt den Cassegrain - Fokus mit achtzehn Spiegeln mit einer Ausblendemöglichkeit für den Coudé- Fokus, welche in der mittleren Beobachtungskabine 12 durch einen Sekundärspiegel 23 vorgesehen ist. Die obere Beobachtungskabine 13 trägt an ihrer Unterseite einen Sekundärspiegel 24. Das Okular 25 für den Cassegrain-Fokus ist unterhalb einer Lochblende 26 dargestellt.

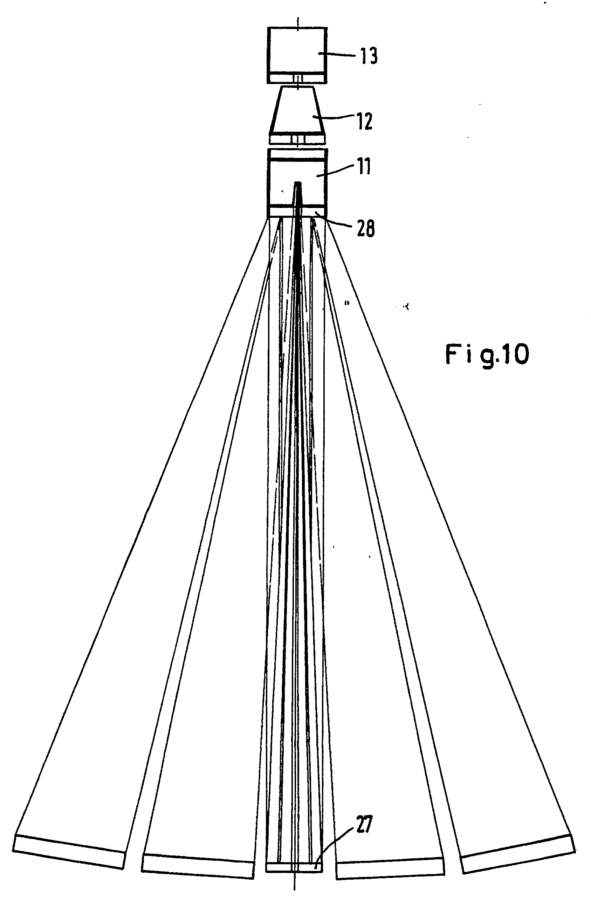

Die Fig. 10 zeigt den Cassegrain-Fokus mit achtzehn Spiegeln und drei-facher Reflektion mittels zweier Spiegel 27,28, die auf der Lochblende 26 bzw. unterhalb der unteren Beobachtungskabine 11 angebracht sind. Die beiden oberen Beobachtungskabinen 12 und 13 sind inaktiv.

In den Fig. 7 bis 10 sind jeweils die Randstrahlen der jeweiligen Spiegelkörper 2 und Sekundärspiegel 23, 24 und 27,28 dargestellt.

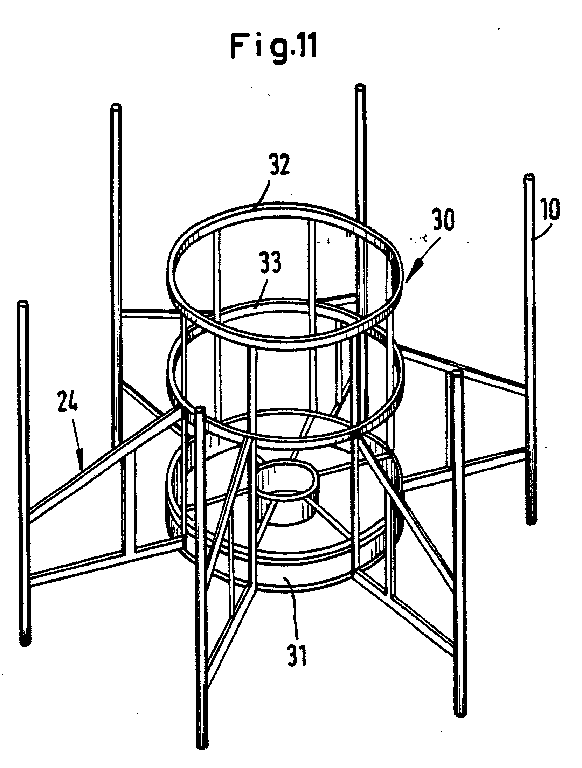

In Fig. 11 ist das Rahmengestell 30 für eine der Beobachtungskabinen 11 bis 13 dargestellt, welches aus einer die Sekundärbzw. Umlenkspiegel 23, 24 bzw. 27,28 aufnehmenden Plattform 31, zwei in einem Abstand oberhalb der Plattform 31 angebrachten Stützringen 32, 33 sowie Radialstreben 34 besteht, welche in den inneren Führungsbzw. Laufschienen 10 vertikal bewegbar geführt sind.

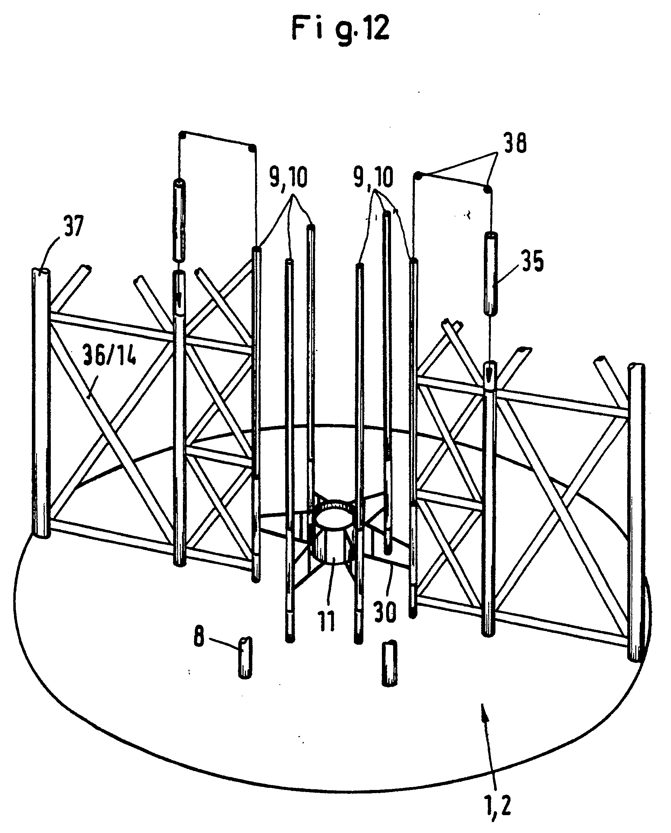

Die Fig. 12 zeigt in einer teilweise geschnittenen Perspektivdarstellung, das innerhalb der Zentralachse 3 des Primärspiegels 1 geführte Rahmengestell 30 mit den Führungs-/Laufschienen 10 der inneren Führungsrohre 9. Über die Gitterstreben 14 als statische Verbindungsträger sind die inneren Führungsro hre 9 gegeniber den mittleren Halterrohren 8 abgestützt, in welchen Ballastkörper 35 zum Gewichtsausgleich der Rahmengestelle 30 der drei Beobachtungskabinen 11 bis 13 geführt sind. Über ein weiteres Gitterwerk 36 werden die mittleren Halterrohre 8 noch durch äußere Halterrohre 37 abgestützt.

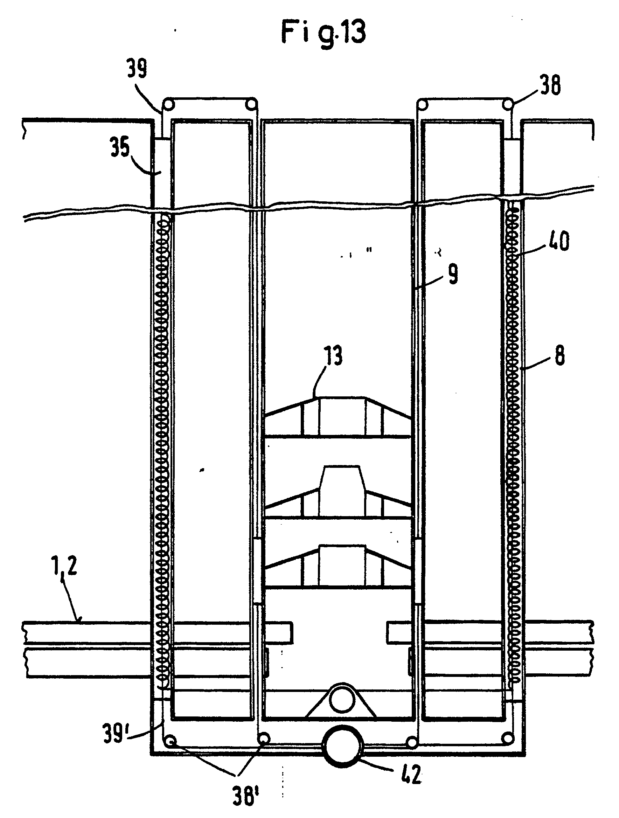

Die Fig. 13 zeigt in vereinfachter Darstellung einen vertikalschnitt durch das Halterungsgestänge 6, wobei die über Umlenkrollen 38 geführten Tragseile 39 dargestellt sind, welche die Ballastkörper 35 mit den einzelnen Beobachtungskabinen 11 bis 13 verbinden. Über untere Umlenkrollen 38′ sind Führungsseile 39′ für die Ballastkörper 35 geführt.

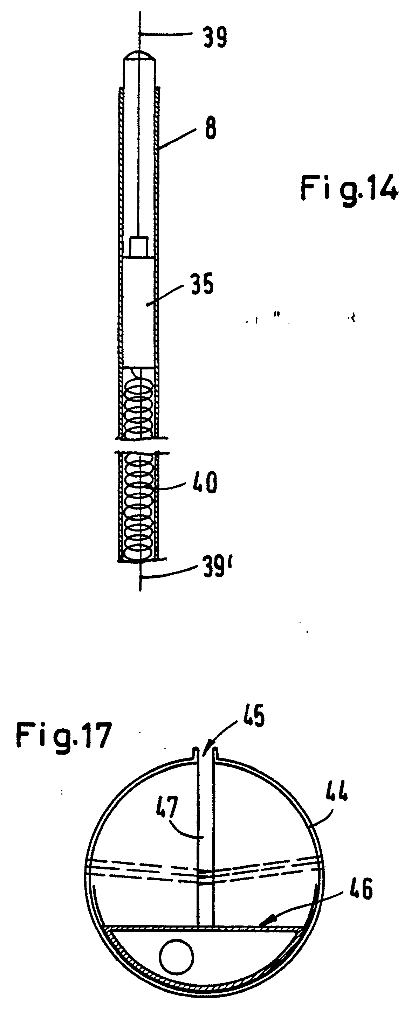

Gemäß Fig. 14 sind die in den mittleren Halerrohren 8 geführten Ballastkörper 35 als Hohlkörper ausgebildet und mit Öldruckschläuchen 40 und über diese mit einer Ölpumpe 41 verbunden, so daß das Gewicht der Ballastkörper 35 je nach Belastung der einzelnen Beobachtungskabinen 11 bis 13 zwecks Gewichtsanpassung verändert werden kann. In nicht näher dargestellter Weise erfolgt die Steuerung der Bewegung der Beobachtungskabinen 11 bis 13 mittels eines Zentralantriebes 42.

Die drei Beobachtungskabinen 11 bis 13 können somit längs der Zentralachse 3 bewegt werden, wozu die Beobachtungskabinen 11 bis 13 in den sechs Lauf-/Führungsschienen 10 gelagert sind. Diese Laufschienen 10 sind reibungsarm in den Führungsrohren 9 gelagert. Jede Beobachtungskabine 11 bis 13 ist an zwei gegenüberliegenden Lauf-/ Führungsschienen 10 aufgehängt. Die beiden voneinander unabhängig arbeitenden Aufhängemechanismen einer jeden Beobachtungskabine 11 bis 13 sind in den zugehörigen mittleren Halterrohren 8 so geführt, daß die jeder Beobachtungskabine 11 bis 13 zugeordneten zwei Ballastkörper 35 das Gewicht der Beobachtungskabine 11 bis 13 aufheben. Somit schwebt jede Beobachtungskabine 11 bis 13 bei vertikal gerichtetem Tubus bzw. Halterungsgestänge 6 in der Laufschienenlagerung. Die Nachführung der Beobachtungskabinen 11 bis 13 für eine exakte Brennpunkteinstellung wird dadurch stark erleichtert.

Da insgesamt sechs mittlere Halterrohre 8 mit sechs Führungsrohren 9 vorgesehen sind, können die drei Beobachtungskabinen 11 bis 13 unabhängig voneinander bewegt werden. Bei einem Durchmesser von etwa 2,4 m bietet jede Beobachtungskabine 11 bis 13 ausreichend Platz, um bis zu vier beobachtende Astronomen aufzunehmen. Die dabei auftretende unterschiedliche Belastung kann dadurch ausgeglichen werden, daß in die Ballastkörper 35 solange Öl eingefüllt wird, bis der theoretische Schwebezustand der Beobachtungskabinen 11 bis 13 erreicht ist. Die Exaktsteuerung kann dann mittels nicht näher dargestellter Lastprüfgeräte automatisch erfolgen.

Die Bewegung der Tragseile 39 und Führungsseile 39′ als Zugseile erfolgt gemäß Fig. 13 in einem geschlossenen System, wobei der Zentralantrieb 42 einen nicht näher dargestellten Elektromotor aufweist, der sich unter der Ebene des Primärspiegels 1 befindet. Die Tragseile 39 sind über die Ballastkörper 35 mit den Führungsseilen 39′ verbunden und greifen innerhalb der Führungsrohre 9 jeweils an der zugehörigen Beobachtungskabine 11 bis 13 bzw. an den diesen zugeordneten Führungsschienen 10 von oben bzw. von unten an. Somit erfolgt eine zentrale Steuerung der Beobachtungskabinen 11 bis 13 vom Zentralantrieb 42 aus.

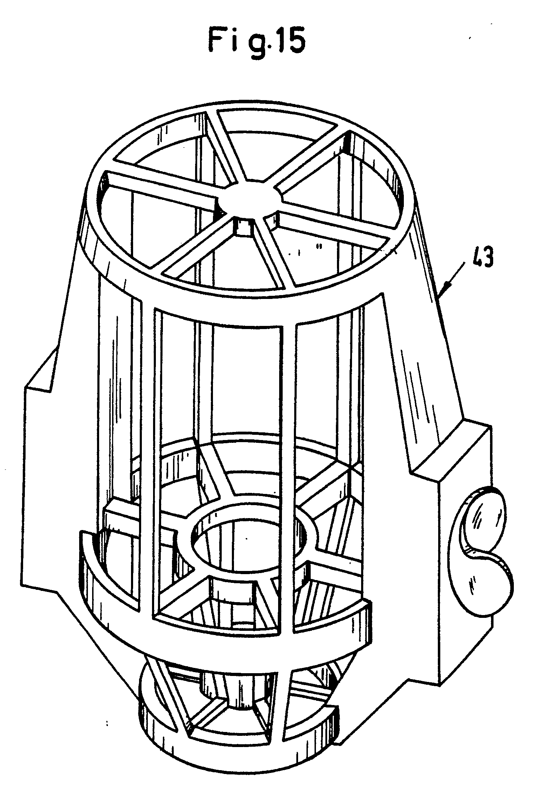

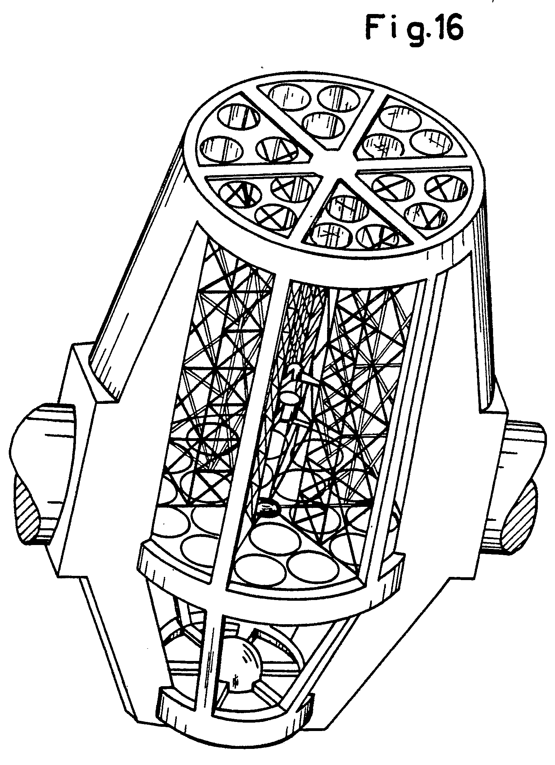

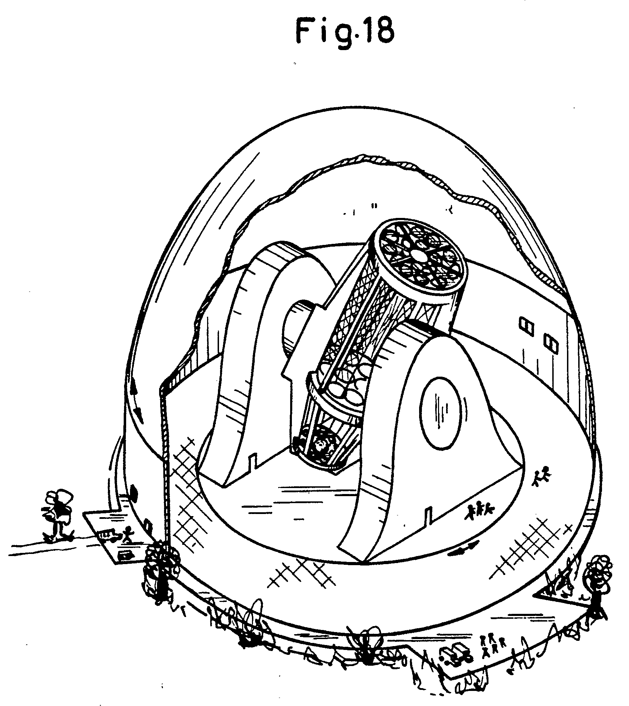

Die Figuren 15 und 16 zeigen in Perspektivdarstellungen den Rahmen 43 des Tubus, in welchen gemäß Fig. 16 der Primärspiegel 1, das auf diesem befindliche Halterungstänge 6 mit Beobachtungskabinen 11 bis 13 und das den Tubus abschließende Lochblech 15 ein- bzw. aufgesetzt sind. Auf der Unterseite des Tubus ist eine kugelförmige Beobachtungskabine 44 für den Coudé-Fokus mit einer kreisrunden Lichteintrittsluke 45 angeordnet, welche in Fig. 17 noch näher dargestellt ist. Die Beobachtungskabine 44 ist starr mit dem Tubus verbunden. Auf einem Ölfilm und daher äußerst reibungsarm gelagert ist eine innere Plattform 46, welche in jeder Stellung des Tubus horizontal ausgerichte t ist. Da die Nachführung des Tubus relativ langsam vor sich geht, sind Schwingungserscheinungen so gut wie ausgeschlossen. Luftturbulenzen in Folge Frischluftzufuhr sind deshalb ohne Belang, weil konstruktive Vorkehrungen, z. B. eine Ummantelung des einfallenden Lichtbündels bis zu den Meßgeräten, getroffen werden können. Der Zugang zur kugelförmigen Beobachtungskabine 44 erfolgt über die Eintrittsluke 45 für das Lichtbündel. Leitungen zur Energieversorgung werden durch parallel zur Lichtbündelummantelung 47 hereingeführte, nicht näher dargestellte Rohrleitungen gewährleistet. Der Durchmesser der kreisrunden Plattform 46 der Beobachtungskugel 44 beträgt etwa 8 m. Unterhalb der Plattform 46 ist somit innerhalb der kugelförmigen Gehäusewandung ausreichend Platz für Öldruck- und Arretierungseinrichtungen.

Die Fig. 18 zeigt das fertige Spiegelteleskop, dessen halbkugelförmiges Dach 48 sich zusammen mit der kreisrunden Bodenplatte 49 dreht. Dies gewährleistet eine sehr exakte Aufhängestützen 50. Die Gesamthöhe der Kuppel beträgt ca. 50 m.

## Ansprüche

1. Spiegelteleskop mit einem aus einzelnen, einstellbar gelagerten Spiegelsegmenten gebildeten Primärspiegel (1), mit einem konzentrisch zu diesem angeordneten, mit Beobachtungskabinen (11,12,13) versehenen Tubus und mit einem Halterungsgestänge (6) für den Tubus, **dadurch gekennzeichnet,**
daß die Spiegelsegmente aus kreisscheibenförmigen Spiegelkörpern (2) gebildet und auf konzentrisch zur Zentralachse (3) verlaufenden Kreisbahnen im Abstand voneinander derart gelagert sind, daß zwischen den einzelnen Spiegelkörpern (2) Freiflächen (4,5) für die Lagerung (7) der Spiegelkörper (2) und für das Halterungsgestänge (6) bzw. für dessen Abschattungsflächen gebildet sind,

2. Spiegelteleskop nach Anspruch 1, dadurch gekennzeichnet, daß die Oberflächen aller Spiegelkörper (2) zur Ausbildung der erforderlichen Paraboloidform des Primärspiegels (1) gemeinsam geschliffen sind.

3. Spiegelteleskop nach Anspruch 1 oder 2, dadurch gekennzeichnet, daß das eingangsseitige Halterungsgestänge des Tubus aus einem Lochblech (15) mit Öffnungen (16) gebildet ist, deren Anordnung und Durchmesser der Anordnung und dem Durchmesser der Spiegelkörper (2) des Primärspiegels (1) entspricht.

4. Spiegelteleskop nach einem der Ansprüche 1 bis 3 , dadurch gekennzeichnet , daß das Halterungsgestänge (6) eine statische Tragekonstruktion für den Tubus bildende Halterohre (8) und mit Führungsschienen (10) zur Führung von drei Beobachtungskabinen (11,12,13) versehene innere Führungsrohre (9) umfaßt.

5. Spiegelteleskop nach Anspruch 4 , dadurch gekennzeichnet , daß die Beobachtungskabinen (11,12,13) mit den Sekundär-bzw. Umlenkspiegeln (23,24,27,28) versehen sind und frei längs der Zentralachse des Tubus bewegbar sind .

6. Spiegelteleskop nach einem der Ansprüche 1 bis 5 , dadurch gekennzeichnet , daß die Lagerungen (7) eines jeden Spiegelkörpers (2) einstellbar ausgebildet sind .

7. Spiegelteleskop nach Anspruch 6 , dadurch gekennzeichnet , daß die Lagejustierung eines jeden Spiegelkörpers (2) mittels Laser-Impulsgebern (17) erfolgt , die am Rande eines jeden Spiegelkörpers (2) angebracht sind und an je einen senkrecht darüber befindlichen , am Lochblech (16) angebrachten , von einem Computer kontrollierten Empfänger(18) Impulse abgeben .

8. Spiegelteleskop nach einem der vorangegangenen Ansprüche , dadurch gekennzeichnet , daß für jede Beobachtungskabine (11-13) ein Rahmengestell (30) vorgesehen ist , das aus einer die Sekundär- bzw. Umlenkspiegel (23,24,27,28) aufnehmenden Plattform (31) zwei in einem Abstand oberhalb der Plattform (31) angebrachten Stützringen (32,33) und Radialstreben (34) besteht, die in den inneren Führungs- bzw. Laufschienen (10) vertikal bewegbar geführt sind .

## Claims

1. Reflecting telescope with a primary mirror (1) consisting of individual adjustably mounted mirror segments, with a tube positioned concentrically with respect to the primary mirror and equipped with observation cages (11,12,13), and with a system of mounting bars (6) for the tube, **characterized in that**
the mirror segments consist of mirror elements (2) in the shape of circular discs and are mounted at intervals from one another on circular tracks running concentric to the central axis (3) in such a way that free areas (4,5) are formed between the individual mirror elements (2) for the bearings (7) of the mirror elements (2) and for the system of mounting bars (6) and their shadows.

2. Reflecting telescope pursuant to claim 1, **characterized in that**
the surfaces of all the mirror elements (2) are ground all together to form the required surface shape of the primary mirror (1).

3. Reflecting telescope pursuant to claim 1 or 2, **characterized in that**
on the incoming side of the system of mounting bars of the tube consists of a perforated plate (15) with holes (16) whose arrangement and diameter correspond to the arrangement and diameter of the mirror elements (2) of the primary mirror (1).

4. Reflecting telescope pursuant to one of the claims 1 to 3,
   **characterized in that**
   the mounting bars (6) include support pipes (8) which form a static support structure for the tube and further includes inner guide pipes (9) which are equipped with guide rails (10) for guiding of three observation cages (11,12,13).

5. Reflecting telescope pursuant to claim 4,
   **characterized in that**
   the observation cages (11,12,13) are equipped with secondary or deflection mirrors (23,24,27,28) and are movable along the central axis of the tube.

6. Reflecting telescope pursuant to one of the claims 1 to 5,
   **characterized in that**
   the bearings (7) of each mirror element (2) are adjustable.

7. Reflecting telescope pursuant to claim 6,
   **characterized in that**
   the position of each mirror element (2) is adjustable by laser pulse generators (17) which are mounted at the edge of each mirror element (2) and which emit pulses to a corresponding receiver, which is mounted on the perforated plate (16) vertically above the mirror element and which is controlled by a computer.

8. Reflecting telescope pursuant to one of the preceding claims,
   **characterized in that**
   a framework (30) is provided for each observation cage (II to 13) which consists of a platform (31) holding the secondary or deflection mirrors (23,24,27,28), of two support rings (32,33) mounted at a distance above the platform (31) and of radial struts (34) which are guided in the inner guide rails (10) so as to be capable of vertical movement.

**Revendications**

1. Télescope à miroir comportant un miroir primaire (1) formé de segments de miroir montés de manière réglable, et d'un tube optique disposé-concentrique à celui-ci, ce miroir primaire comportant des cabines d'observation (11, 12, 13) ainsi qu'une ossature de soutien du tube, télescope caractérisé en ce que les segments de miroir sont des corps de miroir en forme de disques circulaires (2) montés sur des trajectoires circulaires concentriques à l'axe central (3), trajectoires distantes les unes des autres et en ce qu'entre les différents corps de miroir (2) se trouvent des surfaces libres (4, 5) pour servir aux moyens de support (7) des corps de miroir (2) et pour les surfaces d'obscurcissement.

2. Télescope à miroir selon la revendication 1, caractérisé en ce que les surfaces supérieures de tous les corps de miroir (2) sont rôdées en commun pour former les surfaces supérieures nécessaires du miroir primaire (1).

3. Télescope à miroir selon la revendication 1 ou 2, caractérisé en ce que l'ossature de support du tube optique à l'entrée formée par une tôle perforée munie d'orifices (16) et la répartition du diamètre de ces orifices correspondent à la répartition et au diamètre des corps de miroir (2) formant le miroir primaire (1).

4. Télescope à miroir selon l'une des revendications 1 à 3, caractérisé en ce que l'ossature (6) comporte des tubes de maintien (8) formant une construction statique pour le tube optique et cette ossature comprend des tubes de guidage intérieurs (9) munies de rails de guidage (10) pour le guidage de trois cabines d'observation (11, 12, 13).

5. Télescope à miroir selon la revendication 4, caractérisé en ce que les cabines d'observation (11, 12, 13) munies de miroirs secondaires ou miroirs de renvoi (23, 24, 27, 28) sont mobiles le long de l'axe central du tube optique.

6. Télescope à miroir selon l'une des revendications 1 à 5, caractérisé en ce que les moyens de support (7) de chaque corps de miroir (2) sont réglables.

7. Télescope à miroir selon la revendication 6, caractérisé en ce que l'ajustage de la position de chaque corps de miroir (2) se fait à l'aide de générateurs d'impulsions à laser prévus aux bords de chaque corps de miroir (2) et émettent des impulsions à un récepteur (18) correspondant qui est contrôlé par un ordinateur et se trouve verticalement au-dessus de corps de miroir sur la tôle à perforations (16).

8. Télescope à miroir selon l'une des revendications précédentes, caractérisé en ce que pour chaque cabine d'observation (11-13) un châssis (30) est prévu composé d'une plate-forme (31) qui porte l'un des miroirs secondaires ou miroirs de renvoi (23, 24, 27, 28), de deux couronnes d'appui (32, 33) distantes au-dessus de la plate-forme (31) et d'entretoises radiales (34) guidées de manière mobile verticalement dans les rails de guidage ou rails de roulement intérieur (10).

Fig.1

Fig. 2

Fig. 3

Fig.4

Fig.5a

Fig.5b

Fig.6a

Fig. 6b

Fig. 6c

Fig.7

Fig. 8

Fig. 9

Fig.10

# Fig.11

# Fi g.12

## Fig.13

Fig.14

Fig.17

# Fig.15

Fig.16

# Fig.18